# EUROPÄISCHE PATENTSCHRIFT

(11) **EP 1 365 166 B1**
(45) Veröffentlichungstag und Bekanntmachung des Hinweises auf die Patenterteilung: **13.06.2007**
(21) Anmeldenummer: 03009666.3
(22) Anmeldetag: 30.04.2003
(51) Int. Cl.: F16D 23/06, F16D 1/112, F16H 57/02

(54) **Drehmomentübertragungseinrichtung**
Torque transmission device
Dispositif de transmission de couple

(30) Priorität: 25.05.2002 DE 10223424
(43) Veröffentlichungstag der Anmeldung: 26.11.2003
(73) Patentinhaber: Bayerische Motoren Werke Aktiengesellschaft, 80809 München (DE)
(72) Erfinder: Körber, Martin, 85375 Neufahrn (DE)

(56) Entgegenhaltungen:
- EP-A- 0 572 126
- EP-A- 0 734 936
- DE-A- 4 008 906
- FR-A- 2 313 593
- US-A- 5 666 854

## Beschreibung

Die vorliegende Erfindung betrifft eine Drehmomentenübertragungseinrichtung gemäß dem Oberbegriff des Patentanspruches 1 sowie ein Schaltgetriebe gemäß dem Oberbegriff des Patentanspruches 8.

Eine Drehmomentübertragungseinrichtung gemäß dem Oberbegriff des Patentanspruches 1 ist aus der CH54543 bekannt. Die CH 54543 beschreibt eine Welle- / Nabeverbindung, bei der die Welle und die Nabe jeweils ein keilwellenartiges Profil aufweisen. In der Montagestellung liegen Außenumfangsflächen der "Wellenzähne" an Innenumfangsflächen der "Nabenzähne" an.

In der DE 39 39 274 C1 ist ein Getriebe bekannt, bei dem auf einer Eingangswelle ein erstes und ein zweites schaltbares Zahnrad drehbar gelagert sind. Zwischen den beiden Zahnrädern ist eine Festmuffe angeordnet, die in Axialrichtung und in Umfangsrichtung fest mit der Eingangswelle verbunden ist. Auf der Festmuffe ist axial verschieblich eine Schiebemuffe angeordnet, die drei Schaltstellungen einnehmen kann, nämlich eine Mittel- bzw. Neutralstellung sowie eine erste bzw. zweite Schaltstellung, in der das erste bzw. zweite Schaltrad über die Schiebemuffe und die Festmuffe drehfest mit der Welle verbunden ist.

Bei derartigen Schaltgetrieben weist die Festmuffe üblicherweise eine Innenverzahnung mit in Achsrichtung verlaufenden Zähnen auf, die in eine Komplementärverzahnung eingreift, welche auf der Welle vorgesehen ist. Die Verbindung zwischen der Welle und der Festmuffe ist in der Regel ein spielfreier Presssitz. Die Montage einer solchen Festmuffe erfolgt entweder durch Aufbringen einer hohen Axialkraft, mit der die "Überdeckung" der beiden Bauteile überwunden wird. Alternativ dazu kann die Festmuffe erwärmt und/oder die Welle abgekühlt werden, was ein Fügen der beiden Bauteile kraftlos bzw. mit geringer Axialkraft ermöglicht.

Schaltgetriebe weisen üblicherweise mehrere auf einer einzigen Welle angeordnete Schaltmuffen auf. Um die Montage mehrerer hintereinander auf der Welle anzuordnender Festmuffen zu erleichtern sind üblicherweise die Innendurchmesser der in Axialrichtung aufeinanderfolgenden Festmuffen "gestuft". "Gestuft" bedeutet, dass die Innendurchmesser der in Axialrichtung aufeinanderfolgenden Festmuffen von Festmuffe zu Festmuffe zunehmen, so dass sie im erwärmten Zustand möglichst schnell und ohne Bauteilbeschädigung über die auf der Welle vorgesehenen "Gegenverzahnungen" der anderen noch nicht montierten Festmuffen "gefädelt" werden können. Folglich ist der Innendurchmesser der zuerst zu montierenden Festmuffe am größten und der der zuletzt zu montierenden Festmuffe ist am kleinsten.

Aufgabe der Erfindung ist es, ganz allgemein eine "Drehmomentenübertragungseinrichtung" zu schaffen, bei der bei mehreren axial hintereinander angzuordnenden "Drehmomentenübertragungseinrichtungen" die Außenteile mit geringem Montageaufwand auf den Innenteilen montierbar sind.

Diese Aufgabe wird durch die Merkmale der Patentansprüche 1 und 8 gelöst. Vorteilhafte Ausgestaltungen und Weiterbildungen der Erfindung sind den Unteransprüchen zu entnehmen.

Die Erfindung geht von einer Drehmomentenübertragungseinrichtung aus, die ein Außenteil aufweist, das im montierten Zustand auf einem Innenteil angeordnet ist. Am Außenumfang des Innenteils und am Innenumfang des Außenteils sind jeweils ein oder mehrere Verzahnungsabschnitte vorgesehen, die im montierten Zustand ineinander greifen.

Das Grundprinzip der Erfindung besteht nun darin, am Außenumfang des Innenteils und am Innenumfang des Außenteils jeweils mindestens einen zahnlosen Abschnitt vorzusehen, wobei die zahnlosen Abschnitte so dimensioniert sind, dass in einer Montagestellung des Außen- und Innenteils ihre Verzahnungsabschnitte in den zahnlosen Abschnitten des jeweils anderen Teils aufnehmbar sind.

Der wesentliche Vorteil der Erfindung ist, dass das Außenteil in der Montagstellung im wesentlichen kraftlos axial über das Innenteil geschoben werden kann. Bei Schaltgetrieben, bei denen auf einer Welle hintereinander mehrere solcher "Drehmomentenübertragungseinrichtungen" vorgesehen sind, können die Innenteile und die Außenteile, welche die Funktion von Festmuffen haben, baugleich und somit kostengünstig gestaltet sein. Im Unterschied zum Stand der Technik ist somit auch bei baugleichen Festmuffen eine Montage problemlos möglich. In der Montagestellung können nämlich die Festmuffen, das heißt die Außenteile, mühelos über die Innenteile geschoben werden, die beispielsweise durch Außenverzahnungen gebildet sind, welche auf einer Welle vorgesehen sind.

Zur Sicherstellung einer problemlosen Montage ist nach einer Weiterbildung der Erfindung vorgesehen, dass die zahnlosen Abschnitte des Außenteils in Umfangsrichtung gesehen länger sind als die in der Montagestellung darin einzubringenden Verzahnungsabschnitte des Innenteils. Ferner ist der Innenradius der zahnlosen Abschnitte des Außenteils größer als der Außenradius der Verzahnungsabschnitte des Innenteils. Des Weiteren sind die zahnlosen Abschnitte des Innenteils in Umfangsrichtung gesehen länger als die Verzahnungsabschnitte des Außenteils und der Außenradius der zahnlosen Abschnitte des Innenteils ist kleiner als der Innenradius der Verzahnungsabschnitte des Außenteils. Durch diese geometrischen "Verhältnisse" ist sichergestellt, dass das Außenteil in der Montagestellung praktisch kraftfrei über das Innenteil schiebbar ist.

Die Verzahnungsabschnitte des Innenteils und des Außenteils hingegen sind vorzugsweise so dimensioniert, dass sie im montierten Zustand einen spielfreien Presssitz bilden. Durch den Presssitz ist eine axiale Fixierung des Außenteils auf dem Innenteil sichergestellt.

Im folgenden wird die Erfindung im Zusammenhang mit der Zeichnung näher erläutert. Es zeigen:
- Figur 1, 2: eine "Drehmomentenübertragungseinrichtung" gemäß dem Stand der Technik;
- Figur 3: ein Innenteil;
- Figur 4: ein Außenteil in Form einer Festmuffe mit Schiebemuffe;
- Figur 5: Innenteil und Außenteil in der Montagestellung;
- Figur 6: Innenteil und Außenteil im montierten Zustand.

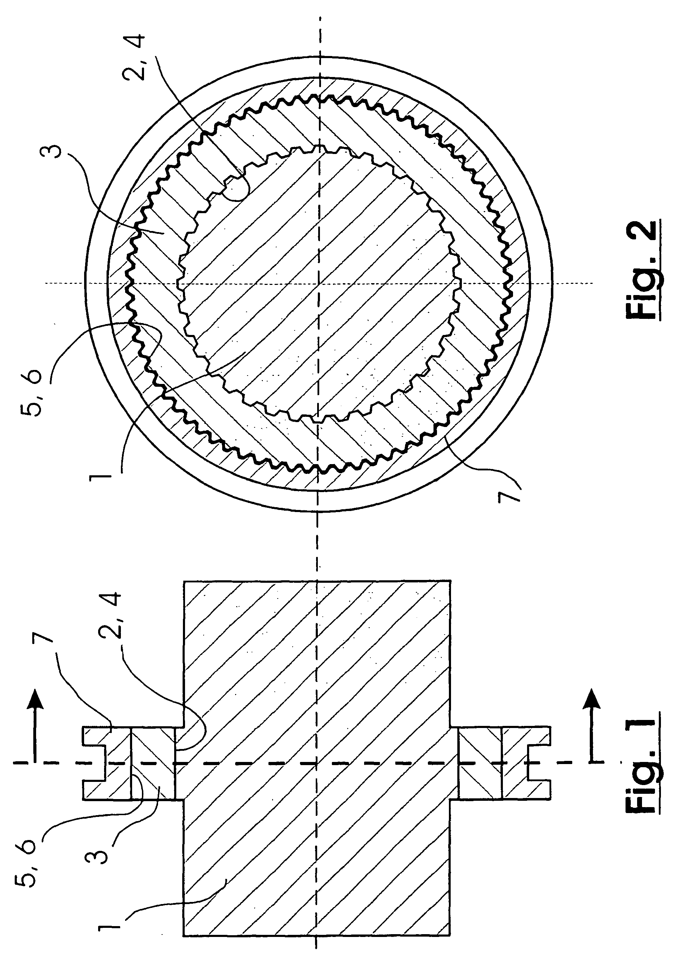

Die **Figuren 1 und 2** zeigen eine "Drehmomentenübertragungseinrichtung" gemäß dem Stand der Technik, die ein Innenteil und ein Außenteil aufweist. Das Innenteil ist durch eine Welle 1 gebildet, die eine sich über den gesamten Außenumfang der Welle 1 erstreckende Außenverzahnung 2 aufweist. Auf die Welle 1 ist eine Festmuffe 3 im Presssitz angeordnet. Die Festmuffe 3 weist eine Innenverzahnung 4 auf, welche in die Außenverzahnung 2 eingreift. Die Festmuffe 3 wiederum weist eine Außenverzahnung 5 auf, in welche eine Innenverzahnung 6 einer Schiebemuffe 7 eingreift, die axial auf der Festmuffe 3 verschiebbar ist.

Bei Getriebewellen, auf denen in Axialrichtung mehrere Festmuffen hintereinander angeordnet werden sollen, werden üblicherweise für die in Axialrichtung aufeinanderfolgenden Festmuffen zunehmende bzw. abnehmende Innendurchmesser gewählt, um eine leichte Montage zu ermöglichen.

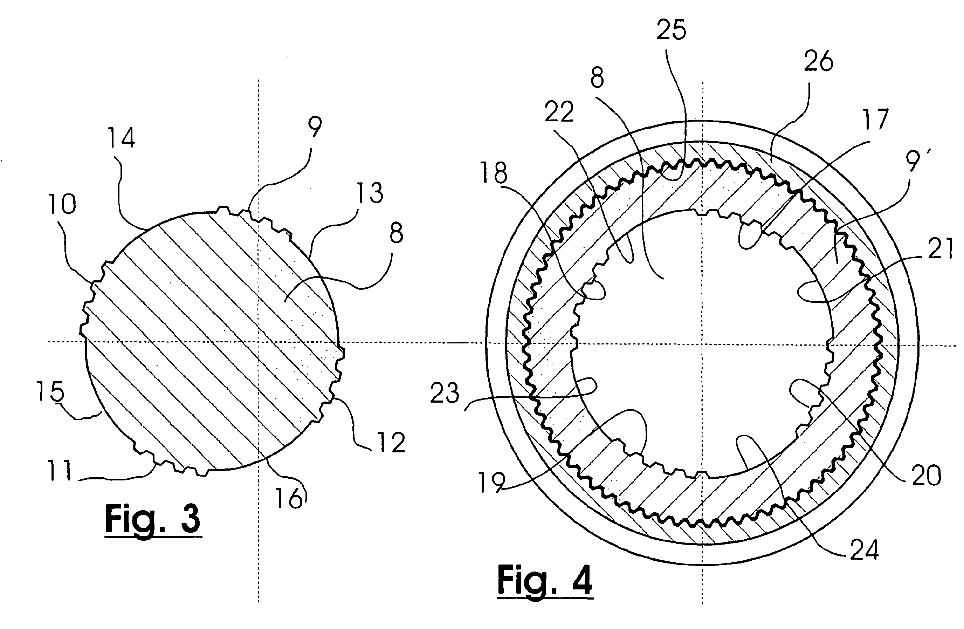

**Figur 3** zeigt eine Welle 8, an deren Außenumfang vier Außenverzahnungsabschnitte 9 - 12 vorgesehen sind, zwischen denen jeweils zahnlose Abschnitte 13 - 16 vorgesehen sind, deren Radius geringer ist als der "Kopfkreisradius" der Verzahnungsabschnitte 9 - 12.

**Figur 4** zeigt ein Außenteil, das durch eine Festmuffe 9' gebildet ist. Die Festmuffe 9' weist vier Innenverzahnungsabschnitte 17 - 20 auf, zwischen denen jeweils zahnlose Abschnitte 21 - 24 vorgesehen sind. Der Radius der zahnlosen Abschnitte 21 - 24 ist größer als der Radius der Verzahnungsabschnitte 17 - 20.

Vollständigkeitshalber sei noch erwähnt, dass die Festmuffe 9' an ihrem Außenumfang eine umlaufende Außenverzahnung 25 aufweist, in die eine zugeordnete Innenverzahnung einer axial auf der Festmuffe 9 verschieblich angeordneten Schiebemuffe 26 eingreift.

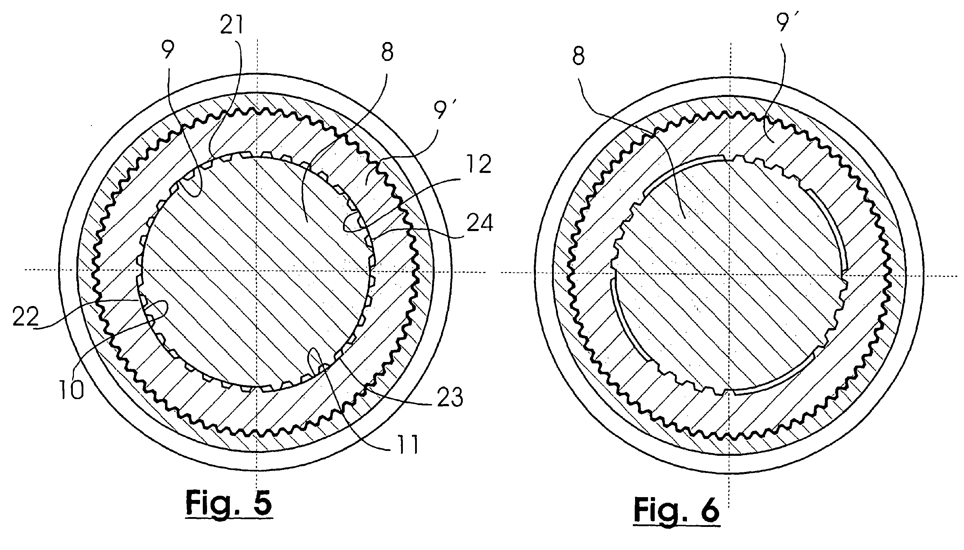

**Figur 5** zeigt die Welle 8 und die Festmuffe 9' in Montagestellung. In der Montagestellung befinden sich die Verzahnungsabschnitte 9 - 12 der Welle 8 in den zahnlosen Abschnitten 21 - 24 der Festmuffe 9'. Die zahnlosen Abschnitte 21 - 24 der Festmuffe 9' sind in Umfangsrichtung gesehen etwas länger als die Verzahnungsabschnitte 9 - 12 der Welle 8.

Ferner ist, was aus **Figur 5** aufgrund des gewählten Maßstabes nicht ersichtlich ist, der Innenradius der zahnlosen Abschnitte der Festmuffe 9' etwas größer als der Außenradius der Verzahnungsabschnitte 9-12 der Welle 8. Außerdem sind die zahnlosen Abschnitte 13 - 16 der Welle 8 in Umfangsrichtung gesehen etwas länger als die Verzahnungsabschnitte 17 - 20 der Festmuffe 9 und der Außenradius der zahnlosen Abschnitte 13 - 16 der Welle 8 ist etwas kleiner als der Innenradius der Verzahnungsabschnitte 17 - 20 der Festmuffe 9'. Durch diese "geometrische Abstimmung" der beiden Teile ist ein "kraftloses" Aufschieben der Festmuffe 9 auf die Welle 8 möglich.

**Figur 6** zeigt den montierten Zustand. Im montierten Zustand greifen die Verzahnungsabschnitte der Welle 8 und der Festmuffe 9' ineinander. Das eigentliche Aufschieben der Festmuffe 9' auf die zugeordnete Wellenverzahnung erfolgt dann wie eingangs erwähnt durch eine hinreichend hohe Axialkraft, mit der das "Übermaß" überwunden werden kann und/oder durch Erwärmen bzw. Abkühlen des "Außenteils" und ggf. des "Innenteils".

## Patentansprüche

1. Drehmomentenübertragungseinrichtung mit einem Außenteil (9'), das in einem montierten Zustand auf einem Innenteil (8) angeordnet ist, wobei der Außenumfang des Innenteils (8) und der Innenumfang des Außenteils (9') jeweils mindestens einen Verzahnungsabschnitt (9 - 12, 17 - 20) aufweisen, wobei
der Außenumfang des Innenteils (8) und der Innenumfang des Außenteils (9') jeweils mindestens einen zahnlosen Abschnitt aufweisen (13 -16,20-24)
**dadurch gekennzeichnet, dass**
die Verzahnungsabschnitte jeweils durch mehrere Zähne gebildet sind und die Verzahnungsabschnitte (9 - 12, 17 - 20) im montierten Zustand ineinandergreifen, und dass
die zahnlosen Abschnitte (13 - 16; 20 - 24) so dimensioniert sind, dass in einer Montagestellung die Verzahnungsabschnitte (9 - 12; 17 - 20) in den zahnlosen Abschnitten (13 - 16; 20 - 24) aufnehmbar sind und das Außenteil (9') im wesentlichen kraftlos axial über das Innenteil (8) schiebbar ist.

2. Drehmomentenübertragungseinrichtung, nach Anspruch 1, wobei das Außenteil (9') und das Innenteil (8) jeweils mindestens zwei Verzahnungsabschnitte (9 -12; 17 - 20) aufweisen, wobei zwischen den Verzahnungsabschnitten (9 - 12, 17 - 20) jeweils ein zahnloser Abschnitt (13 - 16; 20 - 24) liegt.

3. Drehmomentenübertragungseinrichtung, nach Anspruch 1 oder 2, wobei die zahnlosen Abschnitte (20 - 24) des Außenteils (9') in Umfangsrichtung gesehen länger sind als die Verzahnungsabschnitte (9 - 12) des Innenteils (8) und der Innenradius der zahnlosen Abschnitte (20 - 24) des Außenteils (9') größer ist als der Außenradius der Verzahnungsabschnitte (9 - 12) des Innenteils (8) und
die zahnlosen Abschnitte des Innenteils (13 - 16) in Umfangsrichtung gesehen länger sind als die Verzahnungsabschnitte (17 - 20) des Außenteils (9') und der Außenradius der zahnlosen Abschnitte (13 - 16) des Innenteils (8) kleiner ist als der Innenradius der Verzahnungsabschnitte (17 - 20) des Außenteils (9').

4. Drehmomentenübertragungseinrichtung, nach einem Ansprüche 1 bis 3, wobei die Verzahnungsabschnitte (9 - 12; 17 - 20) des Innenteils (8) und des Außenteils (9') so dimensioniert sind, dass sie im montierten Zustand in einem spielfreien Presssitz ineinander greifen.

5. Drehmomentenübertragungseinrichtung, nach einem der Ansprüche 1 bis 4, wobei das Innenteil (8) eine Welle ist und die Verzahnungsabschnitte (9 - 12) des Innenteils (8) unmittelbar auf der Welle (8) ausgebildet sind.

6. Drehmomentenübertragungseinrichtung, nach einem der Ansprüche 1 bis 5, wobei das Außenteil (9') eine Festmuffe eines Schaltgetriebes ist, wobei die Festmuffe (9') im montierten Zustand in Axialrichtung und in Umfangsrichtung fest auf dem Innenteil (8) sitzt und an ihrem Außenumfang eine Verzahnung (25) mit in Axialrichtung verlaufenden Zähnen aufweist.

7. Drehmomentenübertragungseinrichtung, nach Anspruch 6, wobei auf der Festmuffe (9') eine axial verschiebliche Schiebemuffe (26) angeordnet ist.

8. Schaltgetriebe mit einer Getriebewelle (8), auf der mehrere Drehmomentenübertragungseinrichtungen gemäß einem der Ansprüche 1 bis 7 vorgesehen sind.

9. Schaltgetriebe nach Anspruch 8, wobei die auf der Getriebewelle vorgesehenen bzw. durch die Getriebewelle (8) gebildeten Innenteile baugleich sind.

10. Schaltgetriebe mit mehreren Zahnradstufen, die jeweils eine Drehmomentenübertragungseinrichtung gemäß einem der Ansprüche 1 bis 7 aufweisen, wobei sämtliche Innenteile der Drehmomentenübertragungseinrichtungen baugleich sind.

## Claims

1. A torque-transmitting device comprising an outer part (9') which when assembled is disposed on an inner part (8), wherein the outer periphery of the inner part (8) and the inner periphery of the outer part (9') each comprise at least one toothed portion (9 - 12, 17 - 20), wher ein
the outer periphery of the inner part (8) and the inner periphery of the outer part (9') each comprise at least one non-toothed portion (13 - 16, 20 - 24)
**characterised in that**
the toothed portions are each formed by a number of teeth and the toothed portions (9 - 12, 17 - 20) engage in one another when assembled, and
the non-toothed portions (13 - 16; 20 - 24) are so dimensioned that in an assembly position the toothed portions (9 - 12; 17 - 20) are receivable into the non-toothed portions (13 - 16; 20 - 24) and the outer part (9') can be substantially effortlessly slid axially over the inner part (8).

2. A torque-transmitting device according to claim 1, wherein the outer part (9') and the inner part (8) each have at least two toothed portions (9 - 12; 17 - 20), wherein a non-toothed portion (13 - 16; 20 - 24) lies between each respective pair of toothed portions (9 - 12, 17 - 20).

3. A torque-transmitting device according to claim 1 or claim 2, wherein the non-toothed portions (20 - 24) of the outer part (9') are longer in the peripheral direction than the toothed portions (9 - 12) of the inner part (8) and the inner radius of the non-toothed portions (20 - 24) of the outer part (9') is greater than the outer radius of the toothed portions (9 - 12) of the inner p art (8) and
the non-toothed portions of the inner part (13 - 16) are longer in the peripheral direction than the toothed portions (17 - 20) of the outer part (9') and the outer radius of the non-toothed portions (13 - 16) of the inner part (8) is less than the inner radius of the toothed portions (17 - 20) of the outer part (9').

4. A torque-transmitting device according to any of claims 1 to 3, wherein the toothed portions (9 - 12; 17 - 20) of the inner part (8) and of the outer part (9') are so dimensioned that when in the assembled state they engage in one another in a clearance-free force fit.

5. A torque-transmitting device according to any of claims 1 to 4, wherein the inner part (8) is a shaft and the toothed portions (9 - 12) of the inner part (8) are formed immediately on the shaft (8).

6. A torque-transmitting device according to any of claims 1 to 5, wherein the outer part (9') is a fixed sleeve of a change-speed gear, wherein the fixed sleeve (9') when assembled is fixed on the inner part (8) in the axial direction and in the peripheral direction and on its outer periphery has teeth (25) extending in the axial direction.

7. A torque-transmitting device according to claim 6, wherein an axially movable sliding sleeve (26) is disposed on the fixed sleeve (9').

8. A sliding gear comprising a gear shaft (8) on which a number of torque-transmitting devices according to any of claims 1 to 7 are provided.

9. A sliding gear according to claim 8, wherein the inner parts formed on or by the gear shaft (8) are identical in construction.

10. A change-speed gear with a number of gear stages each comprising a torque-transmitting device according to any of claims 1 to 7, wherein all the inner parts of the torque-transmitting devices are identical in construction.

## Revendications

1. Dispositif de transmission de couple avec une pièce extérieure (9'), qui à l'état monté est disposée sur une pièce intérieure (8), la périphérie extérieure de la pièce intérieure (8) et la périphérie intérieure de la pièce extérieure (9') présentant chacune au moins un segment denté (9 - 12, 17 - 20), et la périphérie extérieure de la pièce intérieure (8) et la périphérie intérieure de la pièce extérieure (9') présentant chacune au moins un segment sans dents (13 - 16, 20 - 24),
**caractérisé en ce que**
les segments dentés sont chaque fois formés par plusieurs dents et les segments dentés (9 - 12, 17 - 20) s'engagent les uns dans les autres à l'état monté, et les segments sans dents (13 - 16 ; 20 - 24) sont dimensionnés de telle manière que, dans une position de montage, les segments dentés (9 - 12 ; 17 - 20) puissent être logés dans les segments sans dents (13 - 16 ; 20 - 24) et que la pièce extérieure (9') puisse être glissée axialement au-dessus de la pièce intérieure (8) pratiquement sans effort.

2. Dispositif de transmission de couple selon la revendication 1,
**caractérisé en ce que**
la pièce extérieure (9') et la pièce intérieure (8) présentent chacune au moins deux segments dentés (9 - 12 ; 17 - 20), et un segment sans dents (13 - 16 ; 20 - 24) est chaque fois situé entre les segments dentés (9 - 12 ; 17 - 20).

3. Dispositif de transmission de couple selon la revendication 1 ou 2,
**caractérisé en ce que**
les segments sans dents (20 - 24) de la pièce extérieure (9') sont en direction périphérique, plus longs que les segments dentés (9 - 12) de la pièce intérieure (8) et le rayon intérieur des segments sans dents (20 - 24) de la pièce extérieure (9') est plus grand que le rayon extérieur des segments dentés (9 - 12) de la pièce intérieure (8), et les segments sans dents de la pièce intérieure (13 - 16) sont en direction périphérique plus longs que les segments dentés (17 - 20) de la pièce extérieure (9') et le rayon extérieur des segments sans dents (13 - 16) de la pièce intérieure (8) est plus petit que le rayon intérieur des segments dentés (17 - 20) de la pièce extérieure (9').

4. Dispositif de transmission de couple selon l'une quelconque des revendications 1 à 3,
**caractérisé en ce que**
les segments dentés (9 - 12 ; 17 - 20) de la pièce intérieure (8) et de la pièce extérieure (9') sont dimensionnés de telle manière qu'à l'état monté, ils s'engagent les uns dans les autres en un ajustement serré sans jeu.

5. Dispositif de transmission de couple selon l'une quelconque des revendications 1 à 4,
**caractérisé en ce que**
la pièce intérieure (8) est un arbre et les segments dentés (9 - 12) de la pièce intérieure (8) sont formés directement sur l'arbre (8).

6. Dispositif de transmission de couple selon l'une quelconque des revendications 1 à 5,
**caractérisé en ce que**
la pièce extérieure (9') est un manchon fixe d'une boîte de vitesses, dans lequel le manchon fixe (9'), à l'état monté est solidaire de la pièce intérieure (8) en direction axiale et en direction périphérique, et sa périphérie extérieure présente une denture (25) avec des dents orientées en direction axiale.

7. Dispositif de transmission de couple selon la revendication 6,
**caractérisé en ce qu'**
un manchon glissant (26) pouvant coulisser axialement est disposé sur le manchon fixe (9').

8. Boîte de vitesses avec un arbre de transmission (8),
**caractérisée par**
plusieurs dispositifs de transmission de couple selon l'une quelconque des revendications 1 à 7.

9. Boîte de vitesses selon la revendication 8,
**caractérisée en ce que**
les pièces intérieures prévues sur l'arbre de transmission ou formées par l'arbre de transmission (8) présentent la même structure.

10. Boîte de vitesses avec plusieurs étages de roues dentées, qui comprennent chaque fois un dispositif de transmission de couple selon l'une quelconque des revendications 1 à 7,
**caractérisée en ce que**
toutes les pièces intérieures des dispositifs de transmission de couple ont la même structure.
